# EUROPEAN PATENT APPLICATION

(11) **EP 4 852 132 A1**
(43) Date of publication of application: **09.12.2026**
(21) Application number: 24920972.7
(22) Date of filing: 01.02.2024
(51) Int. Cl.: H01M 10/42

(54) **METHOD AND APPARATUS FOR MANUFACTURING BATTERY, AND CONTROL SYSTEM**

(71) Applicant: Contemporary Amperex Technology Co., Limited, Ningde, Fujian 352100 (CN)
(72) Inventor: WU, Kai, Ningde, Fujian 352100 (CN); LI, Zhonghong, Ningde, Fujian 352100 (CN); LI, Lihong, Ningde, Fujian 352100 (CN); ZUO, Xiyang, Ningde, Fujian 352100 (CN)
(74) Representative: Kraus & Lederer PartGmbB
(86) International application number: PCT/CN2024/075335
(87) International publication number: WO 2025/160909

(57) **Abstract**

Provided in the embodiments of the present application are a method and apparatus for manufacturing a battery, and a control system. The method comprises: performing formation treatment on a battery cell; performing a self-discharge rate (K-value) test and/or an aging test on the battery cell which has undergone the formation treatment, such that the voltage of the battery cell is stable; performing a direct-current resistance test and a capacity test on the battery cell which has undergone the self-discharge rate (K-value) test and/or the aging test; performing a capacity test on the battery cell which has undergone the direct-current resistance test; and performing grading on the battery cell on the basis of a result of the direct-current resistance test and/or a result of the capacity test. The method and apparatus, and the control system in the embodiments of the present application can prolong the service life of a product.

## Description

### TECHNICAL FIELD

Embodiments of this application relate to the field of battery technologies, and in particular, to a battery manufacturing method and apparatus, and a control system.

### BACKGROUND

Due to the requirements for high voltage and large capacity of existing energy storage systems, a large number of batteries need to be assembled in series-parallel to form a container which then exchanges energy with a power grid through a power conversion system. During assembly of the container, poor consistency among parallel battery groups leads to uneven current distribution among container clusters, thereby affecting the power utilization of the entire system container and shortening the overall service life.

### SUMMARY

In view of this, embodiments of this application provide a battery manufacturing method and apparatus, and a control system, which can improve the service life of products.

According to a first aspect, a battery manufacturing method is provided, including: performing a formation treatment on a battery unit; performing a self-discharge rate (K-value) test and/or an aging test on the battery unit subjected to the formation treatment, to stabilize a voltage of the battery unit; performing a direct-current resistance test on the battery unit subjected to the self-discharge rate (K-value) test and/or the aging test; performing a capacity test on the battery unit subjected to the direct-current resistance test; and sorting the battery unit based on a result of the direct-current resistance test and/or a result of the capacity test.

By performing the direct-current resistance test and the capacity test after performing the self-discharge rate (K-value) test and/or the aging test on the battery unit, relatively accurate direct-current resistance data and capacity data may be obtained; and by sorting the battery unit based on the result of the direct-current resistance test and the result of the capacity test, the problem of poor consistency among parallel batteries can be effectively resolved, thereby improving the service life of battery products.

In a possible implementation, the performing a formation treatment on a battery unit includes: forming the battery unit to a first state of charge value; and the performing a direct-current resistance test and a capacity test on the battery unit subjected to the self-discharge rate (K-value) test and/or the aging test includes: performing the direct-current resistance test on the battery unit subjected to the self-discharge rate (K-value) test and/or the aging test under the first state of charge value.

By directly performing the direct-current resistance test on the battery unit under the first state of charge value after formation, the process of the direct-current resistance test can be simplified.

In a possible implementation, the method further includes: converting a first direct-current resistance value obtained by performing the direct-current resistance test under the first state of charge value into a second direct-current resistance value under a second state of charge value; where the second state of charge value is within a state of charge range at the end of charging, or the second state of charge value is within a state of charge range at the end of discharging.

Uneven current distribution among batteries usually occurs at the end of charging or the end of discharging. Therefore, by converting the first direct-current resistance value under the first state of charge value into the second direct-current resistance value under the second state of charge value at the end of charging or at the end of discharging, the influence of direct-current resistance differences among battery units on the uneven current distribution can be minimized. In addition, compared with a solution of directly adjusting a state of charge of the battery unit to the second state of charge value and then performing the direct-current resistance test, this solution can reduce a test duration, and accelerate the mass production rhythm.

In a possible implementation, the performing a direct-current resistance test and a capacity test on the battery unit subjected to the self-discharge rate (K-value) test and/or the aging test includes: adjusting a state of charge of the battery unit subjected to the self-discharge rate (K-value) test and/or the aging test to a second state of charge value; and performing the direct-current resistance test on the battery unit under the second state of charge value; where the second state of charge value is within a state of charge range at the end of charging, or the second state of charge is within a state of charge range at the end of discharging.

By directly performing the direct-current resistance test on the battery unit under the second state of charge value at the end of charging or at the end of discharging, the accuracy of obtaining the second direct-current resistance value can be improved.

In a possible implementation, the performing the direct-current resistance test on the battery unit under the second state of charge value includes: performing the direct-current resistance test on the battery unit under the second state of charge value in a case that the battery unit is left standing for a preset duration.

After the state of charge of the battery unit is adjusted to the second state of charge value at the end of charging or at the end of discharging, the battery unit is left standing sufficiently before the direct-current resistance test is performed, so that the voltage of the battery unit tends to be stable before the test is performed, thereby further improving the accuracy of the second direct-current internal resistance value.

In a possible implementation, the state of charge range at the end of charging is [75%, 100%], and/or the state of charge range at the end of discharging is [10%, 25%].

In a possible implementation, there are a plurality of battery units, and the performing a direct-current resistance test on the plurality of battery units subjected to the self-discharge rate (K-value) test and/or the aging test includes: performing the direct-current resistance test on the plurality of battery units subjected to the self-discharge rate (K-value) test and/or the aging test, to obtain a first direct-current resistance value of each of the plurality of battery units; and the sorting the plurality of battery units based on a result of the direct-current resistance test and/or a result of the capacity test includes: performing time correction and/or temperature correction on the first direct-current resistance value of each of the battery units to obtain a third direct-current resistance value of each of the battery units, and sorting the plurality of battery units based on the third direct-current resistance values of the plurality of battery units.

Time correction and/or temperature correction is performed on the first DCR value of the battery unit obtained through the direct-current resistance test to obtain the second DCR value of the battery unit, and the second DCR value is used as a basis for DCR sorting, so that more accurate DCR control for batteries is achieved.

In a possible implementation, the sorting the plurality of battery units based on the third direct-current resistance values of the plurality of battery units includes: in a case that a sum of the third direct-current resistance values of N battery units among the plurality of battery units is within a first preset range, assembling the N battery units into a battery group, where N is a positive integer greater than 1.

During assembly of the battery group, a DCR control range for the battery group is given, and the N battery units are assembled into the battery group only when it is monitored that a sum of the second DCR values of the N battery units is within the DCR control range. This method has simple control steps, is convenient to operate, and also helps to improve the DCR consistency among battery groups, thereby reducing the probability of occurrence of uneven current distribution during charging or discharging, and ultimately improving the service life of products.

In a possible implementation, the sorting the plurality of battery units based on the third direct-current resistance values of the plurality of battery units includes: in a case that the third direct-current resistance value of each of N battery units among the plurality of battery units is within a second preset range, assembling the N battery units into a battery group, where N is a positive integer greater than 1.

Each battery unit is sorted based on its second DCR value, and ultimately N battery units belonging to a same grade are assembled into a battery group. This method has simple control steps, is convenient to operate, and can also improve the DCR consistency among the battery units within the battery group.

In a possible implementation, the method further includes: determining a direct-current resistance value of the battery group based on the third direct-current resistance value of each of the N battery units.

Based on the second DCR value of each of the plurality of battery units, the DCR value of the battery group may be calculated without performing a DCR test on the battery group, which reduces device costs of a production line and increases production capacity. In addition, obtaining the DCR value of each battery unit also helps to understand the balance inside the battery group, thereby improving the performance of the entire battery group.

In a possible implementation, the battery group further includes connecting components, and the determining a direct-current resistance value of the battery group based on the third direct-current resistance values of the N battery units includes: determining a sum of the third direct-current resistance values of the N battery units and a sum of resistance values of the connecting components as the direct-current resistance value of the battery group.

By determining the sum of the second DCR values of the N battery units and the sum of the resistance values of the connecting components as the DCR value of the battery group, on one hand, the resistance of the connecting components is considered, which improves the accuracy of a direct-current internal resistance of the battery group in comparison with a solution of directly using the sum of the second DCR values of the N battery units as the direct-current internal resistance value of the battery group; on the other hand, as compared with a solution of obtaining the direct-current internal resistance of the battery group through testing, the device costs of the production line can be reduced, and the production capacity is increased.

In a possible implementation, the battery unit is a battery cell, and the battery group is a battery box; or the battery unit is a battery box, and the battery group is a battery cabinet.

In a possible implementation, the method further includes: storing a correspondence between the first direct-current resistance values of the plurality of battery units and respective identifiers of the battery units into at least one of a manufacturing execution system, a battery management system, a cloud server, and a local database.

According to a second aspect, a battery manufacturing apparatus is provided, including: a formation unit, configured to perform a formation treatment on a battery unit; a K-value test and/or aging test unit, configured to perform a self-discharge rate (K-value) test and/or an aging test on the battery unit subjected to the formation treatment, to stabilize a voltage of the battery unit; a direct-current resistance test and capacity test unit, configured to perform a direct-current resistance test and a capacity test on the battery unit subjected to the self-discharge rate (K-value) test and/or the aging test; and a sorting unit, configured to sort the battery unit based on a result of the direct-current resistance test and/or a result of the capacity test.

In a possible implementation, the formation unit is specifically configured to: form the battery unit to a first state of charge value; and the direct-current resistance test and capacity test unit is specifically configured to: perform the direct-current resistance test on the battery unit subjected to the self-discharge rate (K-value) test and/or the aging test under the first state of charge value.

In a possible implementation, the apparatus further includes: a conversion unit, configured to convert a first direct-current resistance value obtained by performing the direct-current resistance test under the first state of charge value into a second direct-current resistance value under a second state of charge value; where the second state of charge value is within a state of charge range at the end of charging, or the second state of charge value is within a state of charge range at the end of discharging.

In a possible implementation, the direct-current resistance test and capacity test unit is specifically configured to: adjust a state of charge of the battery unit subjected to the self-discharge rate (K-value) test and/or the aging test to a second state of charge value; and perform the direct-current resistance test on the battery unit under the second state of charge value; where the second state of charge value is within a state of charge range at the end of charging, or the second state of charge is within a state of charge range at the end of discharging.

In a possible implementation, the direct-current resistance test and capacity test unit is specifically configured to: perform the direct-current resistance test on the battery unit under the second state of charge value in a case that the battery unit is left standing for a preset duration.

In a possible implementation, the state of charge range at the end of charging is [75%, 100%], and/or the state of charge range at the end of discharging is [10%, 25%].

In a possible implementation, there are a plurality of battery units, and the direct-current resistance test and capacity test unit is specifically configured to: perform the direct-current resistance test on the plurality of battery units subjected to the self-discharge rate (K-value) test and/or the aging test, to obtain a first direct-current resistance value of each of the plurality of battery units; and the sorting unit is specifically configured to: perform time correction and/or temperature correction on the first direct-current resistance value of each of the battery units to obtain a third direct-current resistance value of each of the battery units, and sort the plurality of battery units based on the third direct-current resistance values of the plurality of battery units.

In a possible implementation, the sorting unit is specifically configured to: in a case that a sum of the third direct-current resistance values of N battery units among the plurality of battery units is within a first preset range, assemble the N battery units into a battery group, where N is a positive integer greater than 1.

In a possible implementation, the sorting unit is specifically configured to: in a case that the third direct-current resistance value of each of N battery units among the plurality of battery units is within a second preset range, assemble the N battery units into a battery group, where N is a positive integer greater than 1.

In a possible implementation, the apparatus further includes: a determining unit, configured to determine a direct-current resistance value of the battery group based on the third direct-current resistance value of each of the N battery units.

In a possible implementation, the battery group further includes connecting components, and the determining unit is specifically configured to: determine a sum of the third direct-current resistance values of the N battery units and a sum of resistance values of the connecting components as the direct-current resistance value of the battery group.

In a possible implementation, the battery unit is a battery cell, and the battery group is a battery box; or the battery unit is a battery box, and the battery group is a battery cabinet.

In a possible implementation, the apparatus further includes: a storage unit, configured to store a correspondence between the first direct-current resistance values of the plurality of battery units and respective identifiers of the battery units into at least one of a manufacturing execution system, a battery management system, a cloud server, and a local database.

According to a third aspect, a control system is provided, including a memory and a processor. The memory is configured to store instructions, and the processor is configured to read the instructions and execute the method in the first aspect and in any possible implementation of the first aspect based on the instructions.

According to a fourth aspect, a chip is provided, including a processor, where the processor is configured to call and run a computer program from a memory, so that a device equipped with the chip implements the method in the first aspect and in any possible implementation of the first aspect.

According to a fifth aspect, a computer program is provided. The computer program causes a computer to execute the method in the first aspect and in any possible implementation of the first aspect.

According to a sixth aspect, a computer-readable storage medium is provided, which is configured to store a computer program. The computer program causes a computer to execute the method in the first aspect and in any possible implementation of the first aspect.

According to a seventh aspect, a computer program product is provided, including computer program instructions. The computer program instructions cause a computer to execute the method in the first aspect and in any possible implementation of the first aspect.

### BRIEF DESCRIPTION OF DRAWINGS

To explain the technical solution of the embodiments of this application more clearly, the drawings required to be used in the embodiments of this application are briefly introduced below. Obviously, the drawings described below are only some embodiments of this application, and for those of ordinary skill in the art, other drawings can also be obtained based on these drawings without creative efforts.
FIG. 1 shows a schematic diagram of an application scenario for a battery sorting method according to an embodiment of this application.
FIG. 2 is a schematic block diagram of a first battery manufacturing method according to an embodiment of this application.
FIG. 3 is a schematic block diagram of a second battery manufacturing method according to an embodiment of this application.
FIG. 4 is a schematic block diagram of a third battery manufacturing method according to an embodiment of this application.
FIG. 5 is a schematic block diagram of a fourth battery manufacturing method according to an embodiment of this application.
FIG. 6 shows a schematic curve of DCR versus storage duration according to an embodiment of this application.
FIG. 7 is a schematic block diagram of a fifth battery manufacturing method according to an embodiment of this application.
FIG. 8 shows a production flowchart of assembly of a battery cabinet according to an embodiment of this application.
FIG. 9 shows an assembly diagram of a battery box according to an embodiment of this application.
FIG. 10 shows another assembly diagram of a battery box according to an embodiment of this application.
FIG. 11 shows a schematic curve of resistance value of a connecting component versus temperature according to an embodiment of this application.
FIG. 12 shows a schematic block diagram of a battery manufacturing apparatus according to an embodiment of this application.
FIG. 13 shows another schematic block diagram of a battery manufacturing apparatus according to an embodiment of this application.
FIG. 14 shows a schematic block diagram of a control system for manufacturing a battery according to an embodiment of this application.

### DESCRIPTION OF EMBODIMENTS

The implementations of this application are further described in detail below with reference to the drawings and embodiments. The following detailed description of the embodiments and the drawings are used to exemplarily illustrate the principles of this application, but cannot be used to limit the scope of this application, that is, this application is not limited to the described embodiments.

In the description of this application, it should be noted that, unless otherwise specified, "a plurality of" means two or more; and the terms "up", "down", "left", "right", "inner", "outer", and the like indicate orientation or positional relationships only for convenience of describing this application and simplifying the description, rather than indicating or implying that the apparatus or element referred to must have a specific orientation and be constructed and operated in a specific orientation, and therefore cannot be understood as a limitation on this application. In addition, the terms "first", "second", "third", and the like are used for descriptive purposes only, and cannot be understood as indicating or implying relative importance. "Perpendicular" is not perpendicular in a strict sense, but within an allowable range of error. "Parallel" is not parallel in a strict sense, but within an allowable range of error.

The orientation words appearing in the following description are all directions shown in the drawings, and do not limit specific structures of this application. In the description of this application, it should further be noted that, unless otherwise clearly specified and limited, the terms "mounting", "connection", and "join" should be understood in a broad sense. For example, it may be a fixed connection, a detachable connection, or an integral connection; it may be a direct connection, or an indirect connection through an intermediate medium. For those of ordinary skill in the art, the specific meanings of the above terms in this application can be understood according to specific circumstances.

The term "and/or" in this application is only for describing an association relationship between associated objects, representing that three relationships may exist. For example, A and/or B may indicate the following three cases: A exists, both A and B exist, and B exists. In addition, the character "/" in this application generally indicates that the contextually associated objects are in an "or" relationship.

Unless otherwise defined, all technical and scientific terms used in this application have the same meaning as commonly understood by those skilled in the technical field to which this application belongs; the terms used in the specification of this application are only for the purpose of describing specific embodiments, and are not intended to limit this application; and the terms "include", "comprise", "have", and any variations thereof in the specification and claims of this application and the above description of the drawings are intended to cover non-exclusive inclusion. The terms "first", "second", and the like in the specification and claims of this application or the above drawings are used to distinguish different objects, rather than to describe a specific order or primary and secondary relationship.

Reference to "embodiment" in this application means that a particular feature, structure, or characteristic described in connection with this embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in this application can be combined with other embodiments.

A battery refers to a single physical module including one or more battery cells to provide higher voltage and capacity. For example, the battery may be a battery group. The battery group in this application refers to a battery assembly formed by battery units that are connected in series, parallel, or series-parallel, where being connected in series-parallel refers to a combination of a series connection and a parallel connection. For example, the battery group in this application may be a battery box, and the battery unit is a battery cell, that is, the battery box may be formed by a plurality of battery cells that are connected in series and/or in parallel. For another example, the battery group in this application may be a battery cabinet, which may also be referred to as a battery cluster, and the battery unit is a battery box, that is, the battery cabinet is formed by a plurality of battery boxes that are connected in series and/or in parallel.

Optionally, the battery in the embodiments of this application may be a lithium-ion battery, a lithium metal battery, a lead-acid battery, a nickel-cadmium battery, a nickel-metal hydride battery, a lithium-sulfur battery, a lithium-air battery, a sodium-ion battery, or the like, which is not specifically limited in the embodiments of this application.

At present, due to the requirements for high voltage and large capacity of energy storage systems, a large number of batteries need to be assembled in series-parallel to form a container product which then exchanges energy with a power grid through a PCS. During assembly of the container, poor consistency among parallel battery groups reduces the charging and discharging capacity of the container and shortens the overall service life.

In view of this, an embodiment of this application provides a battery manufacturing method. By performing a direct-current resistance test and a capacity test after performing a self-discharge rate (K-value) test and/or an aging test on a battery unit, relatively accurate direct-current resistance data and capacity data may be obtained; and by sorting the battery unit based on a result of the direct-current resistance test and a result of the capacity test, the problem of poor consistency among parallel batteries can be effectively resolved, thereby improving the service life of battery products.

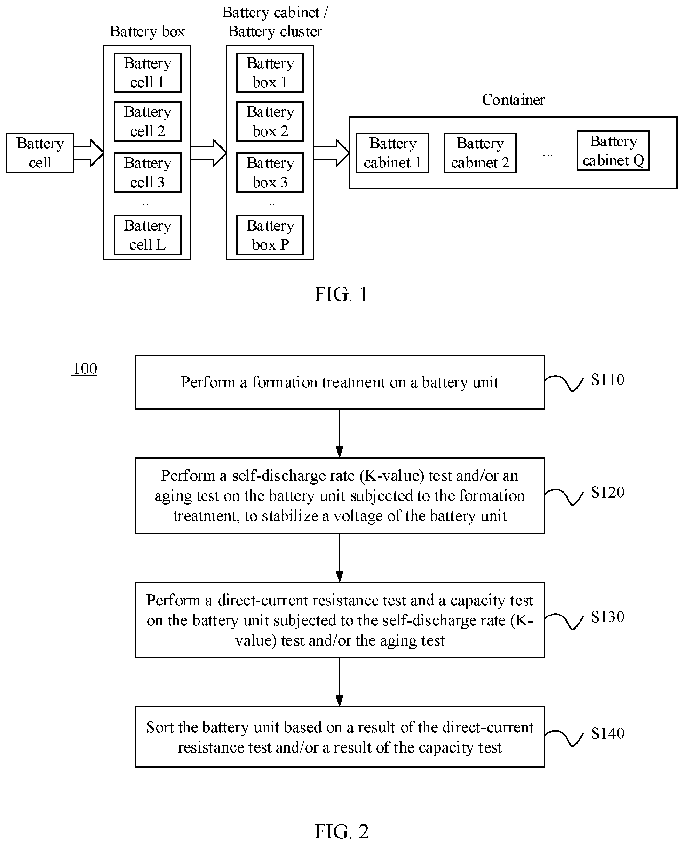

FIG. 1 shows a diagram of a scenario for a battery sorting method according to an embodiment of this application. As shown in FIG. 1, a battery cell is the smallest unit, a battery box is formed by assembling L battery cells that are connected in series and/or in parallel, where L is a positive integer greater than 1; a battery cabinet is formed by assembling P battery boxes that are connected in series and/or in parallel, where P is a positive integer greater than 1; and a container is formed by assembling Q battery cabinets that are connected in parallel, where Q is a positive integer greater than 1.

In other words, the battery unit in this embodiment of this application may be as small as a battery cell, or as large as a battery box, or even a battery cabinet. That is, the battery sorting method provided by this embodiment of this application is applicable to an assembly process of any battery product in FIG. 1.

It should be understood that the technical solution in this embodiment of this application can be applied not only to energy storage batteries, but also to traction batteries.

FIG. 2 shows a schematic block diagram of a battery manufacturing method 100 according to an embodiment of this application. Optionally, the method 100 may be implemented by a control system in an automated battery production and assembly process. For example, the method 100 may be implemented by a manufacturing execution system (Manufacturing Execution System, MES), and the method 100 may include part or all of the following content.

S110. Perform a formation treatment on a battery unit.

S120. Perform a self-discharge rate (K-value) test and/or an aging test on the battery unit subjected to the formation treatment, to stabilize a voltage of the battery unit.

S130. Perform a direct-current resistance test and a capacity test on the battery unit subjected to the self-discharge rate (K-value) test and/or the aging test.

S140. Sort the battery unit based on a result of the direct-current resistance test and/or a result of the capacity test.

Firstly, direct-current resistance (Direct Current Resistance, DCR) refers to a resistance encountered by a current flowing through the inside of a battery during operation, including ohmic internal resistance and polarization internal resistance. The ohmic internal resistance is mainly determined by a total conductivity of the battery, and the polarization internal resistance is mainly determined by a solid-phase diffusion coefficient of lithium ions in an electrode active material. During testing, the battery should be left standing sufficiently to make sure that a voltage is at a stable value, the battery is connected to a test instrument, then a small current is applied to the battery through the test instrument to charge or discharge the battery for a short time, and then the DCR of the battery is calculated based on a measured voltage drop and the applied current. Secondly, the sorting in this embodiment of this application refers to a classification of the DCR and/or a classification of the capacity of the battery unit. The ultimate purpose of sorting is to assemble a fixed number of battery units with a small DCR difference and/or small capacity difference to form a battery group.

Usually, after production or assembly, the battery unit is first subjected to a formation treatment, so that an electrode material and an electrolyte solution form a passivation film, which is a solid electrolyte interphase (solid electrolyte interphase, SEI) film, on a solid-phase interface. The SEI film avoids damage to the electrode material, thereby improving the cycling performance and service life. Specifically, the formation treatment of the battery unit may include some or all of the following steps. 1. Pre-charging: first performing small-current pre-charging on the battery unit to activate the electrolyte solution and positive and negative electrode active materials inside the battery unit. 2. Fast charging: after pre-charging, performing large-current fast charging to quickly increase the power inside the battery unit to reach an expected capacity. During the first charging process, the positive and negative electrode active materials chemically react with the electrolyte solution to form an SEI film, and the chemical reaction inside the battery unit is gradually stabilized.

After the formation treatment is performed on the battery unit, a self-discharge rate (K-value) test and/or an aging test may be performed on the battery unit.

Specifically, the self-discharge rate (K-value) may be construed as a voltage drop per unit time, usually expressed in mv/h, which is an index used to evaluate the self-discharge rate of the battery. Its magnitude is related to whether there is micro-short circuit self-discharge caused by abnormal particles inside the battery unit, and the self-discharge rate (K-value) can be used to evaluate the performance and stability of the battery unit. Through the test of the self-discharge rate (K-value), the self-discharge rate of the battery unit may fall within a determined standard range, thereby ensuring that the battery unit can operate normally and reliably. Optionally, the self-discharge rate (K-value) may be tested at a room temperature or at a high temperature. The self-discharge rate (K-value) varies at different temperatures, which may be tested at different temperatures as needed.

The aging test is a process in which a chemical reaction process inside the battery unit is accelerated through charge and discharge cycles of the battery unit so as to keep the battery in a stable state. The aging test can help to find out early or late failures of the battery unit, thereby improving the quality and stability of the battery unit. Usually, the aging test may be divided into two forms: room-temperature aging and high-temperature aging.

Optionally, the self-discharge rate (K-value) test is performed after high-temperature aging. After high-temperature aging, side reactions inside the battery unit are completed, making the inside of the battery unit relatively stable. After high-temperature aging, room-temperature standing lasts for a sufficient time, so that the temperature of the battery unit and the internal state of the battery unit are relatively stable. A voltage drop within a certain period of time is tested under a stable chemical state, which can reflect a magnitude of physical self-discharge. A large K value indicates that there is a voltage drop caused by micro-short circuit points such as abnormal particles inside a cell.

The battery unit has a stable voltage after being subjected to the self-discharge rate (K-value) test and/or the aging test, so that a stable initial voltage is provided for the DCR test and the capacity test. Therefore, performing the DCR test and the capacity test after performing the self-discharge rate (K-value) test and/or the aging test on the battery unit can not only obtain relatively accurate DCR data, but also reduce a test duration, thereby avoiding waste of production cycle time, and improving the production capacity.

At present, due to the requirements for high voltage and large capacity of energy storage systems, it is inevitable that batteries are connected to a battery system in a parallel connection manner. Due to the problems of battery consistency and aging degree, differences in DCR, capacity, temperature, and SOC among parallel batteries at different periods inevitably lead to current differences among the parallel batteries, which in turn leads to circulating current and uneven current distribution, affecting the capacity and power of energy storage systems. This phenomenon becomes more obvious as the state of health (State of Health, SOH) increases.

Therefore, after obtaining the result of the DCR test and the result of the capacity test, a plurality of battery units can be sorted based on the result of the DCR test and/or the result of the capacity test, which facilitates assembly of a plurality of battery units with a small DCR difference and/or a small capacity difference to form a battery group, thereby reducing the influence of the DCR difference and/or capacity difference on the service life of the battery group.

In some embodiments, the capacity test may be performed after the DCR test, which realizes shared use of a capacity test device, avoiding additional device investment, thereby reducing costs.

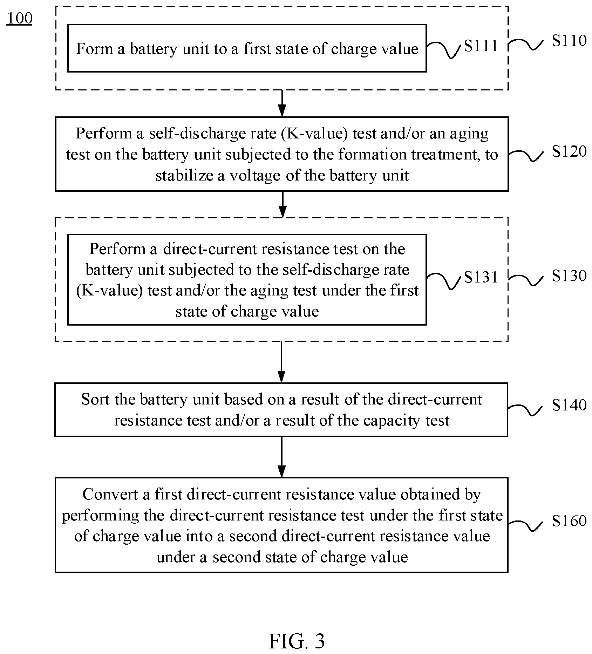

Optionally, as shown in FIG. 3, the S110 of performing a formation treatment on a battery unit includes S111: forming the battery unit to a first state of charge value; and the S130 of performing a direct-current resistance test and a capacity test on the battery unit subjected to the self-discharge rate (K-value) test and/or the aging test includes S131: performing the direct-current resistance test on the battery unit subjected to the self-discharge rate (K-value) test and/or the aging test under the first state of charge value.

In other words, when the battery unit is formed to a specific SOC, the DCR test is performed on the battery unit under this specific SOC. For example, if the battery unit is formed to 21% SOC, that is, the first SOC value is 21%, and the DCR test can be directly performed on the battery unit under this 21% SOC. For another example, if the battery unit is formed to 50% SOC, that is, the first SOC value is 50%, and the DCR test can be directly performed on the battery unit under this 50% SOC. For another example, if the battery unit is formed to 90%, that is, the first SOC value is 90%, and the DCR test can be directly performed on the battery unit under this 90% SOC.

In these embodiments, before the capacity test, directly performing the direct-current resistance test on the battery unit under the first state of charge value after the formation can simplify the process of the direct-current resistance test.

Still referring to FIG. 3, optionally, the method 100 further includes: S160: converting a first direct-current resistance value obtained by performing the direct-current resistance test under the first state of charge value into a second direct-current resistance value under a second state of charge value, where the second state of charge value is within a state of charge range at the end of charging, or the second state of charge value is within a state of charge range at the end of discharging.

It has been found through research that when the energy storage system is at the end of charging or at the end of discharging, there is an obvious uneven current distribution phenomenon. Therefore, a direct-current resistance value of the battery unit obtained under a specific SOC value at the end of charging or at the end of discharging can be selected as the basis for subsequent assembly of battery products such as battery boxes, battery cabinets, or containers, and battery units with similar direct-current internal resistances are assembled into battery products, to ensure product consistency and avoid occurrence of uneven current distribution.

Under normal circumstances, during charging of a battery unit, the SOC value changes from a small value to a large value. Specifically, when the battery unit is charged to a large SOC value, a charging current gradually decreases until the battery unit reaches a trickle charge state. At that time, a voltage of the battery unit also gradually increases and ultimately reaches a charge cut-off voltage. Therefore, a SOC value at the end of charging usually refers to a large SOC value. For example, the SOC range at the end of charging in these embodiments of this application is at least [50%, 100%], that is, the second SOC value is at least greater than 50%. In some embodiments, the SOC range at the end of charging may be a range of [75%, 100%], where the second SOC value may be 75%, 80%, 85%, 90%, or 95%.

Similarly, during discharging of a battery unit, the SOC value changes from a large value to a small value. When the battery unit is discharged to a small SOC value, a voltage of the battery unit also gradually decreases until it decreases to a discharge cut-off voltage, and then the discharging is stopped. Therefore, a SOC value at the end of discharging usually refers to a small SOC value. For example, the SOC range at the end of discharging in these embodiments of this application is at least [0, 50%], that is, the second SOC value is at least less than 50%. In some embodiments, the SOC range at the end of discharging may be within a range of [10%, 25%], where the second SOC value may be 10%, 15%, 20%, 21%, or 25%.

In some embodiments, a conversion coefficient between the first DCR value under the first SOC value and the second DCR value under the second SOC value may be stored inside a test device. For example, when the first SOC value is 40% and the second SOC value is 90%, a conversion coefficient for converting a DCR value under 40% SOC into a DCR value under 90% SOC is stored inside the test device. For another example, when the first SOC value is 40% and the second SOC value is 21%, a conversion coefficient for converting a DCR value under 40% SOC into a DCR value under 21% SOC is stored inside the test device.

Optionally, the conversion coefficient stored inside the test device may be obtained by fitting of test data obtained by performing DCR tests on a plurality of battery units under the first SOC value and the second SOC value, respectively.

As mentioned above, when the energy storage system is at the end of charging or at the end of discharging, there is an obvious uneven current distribution phenomenon. However, usually the SOC value of the battery unit after formation is not necessarily in the SOC range at the end of charging or the SOC range at the end of discharging. As a result, using the DCR data obtained by directly performing the DCR test on the battery unit under the SOC value after formation as the basis for assembling the energy storage system cannot well suppress the uneven current distribution phenomenon. Therefore, the DCR value obtained under the first SOC value of the battery unit after formation can be converted into the DCR value under the second SOC value at the end of charging or at the end of discharging, which can significantly suppress the occurrence of uneven current distribution, thereby improving the overall service life of battery products.

It should be noted that the DCR test process performed on the battery unit under the first SOC value may refer to a process of obtaining a DCR value through calculation after charging the battery unit for a short time under the first SOC value, or may refer to a process of obtaining a DCR value through calculation after discharging the battery unit for a short time under the first SOC value, which is not limited in these embodiments of this application.

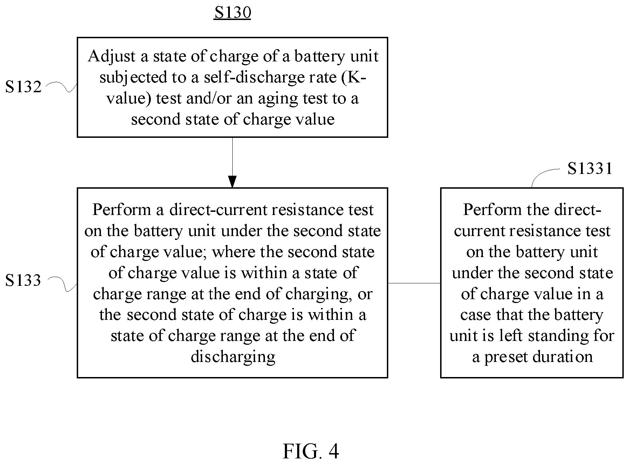

Optionally, as shown in FIG. 4, the S130 of performing a direct-current resistance test and a capacity test on the battery unit subjected to the self-discharge rate (K-value) test and/or the aging test includes S132: adjusting a state of charge of the battery unit subjected to the self-discharge rate (K-value) test and/or the aging test to a second state of charge value; and S133: performing the direct-current resistance test on the battery unit under the second state of charge value; where the second state of charge value is within a state of charge range at the end of charging, or the second state of charge is within a state of charge range at the end of discharging.

Similarly, when the energy storage system is at the end of charging or at the end of discharging, there is an obvious uneven current distribution phenomenon. However, usually the SOC value of the battery unit after formation is not necessarily in the SOC range at the end of charging or the SOC range at the end of discharging. As a result, using the DCR data obtained by directly performing the DCR test on the battery unit under the SOC value after formation as the basis for assembling the energy storage system cannot well suppress the uneven current distribution phenomenon. Therefore, performing the DCR test after charging or discharging the battery unit subjected to formation to the second SOC value at the end of charging or at the end of discharging, and using the DCR data obtained under the second SOC value as the basis for assembling the energy storage system cannot well suppress the uneven current distribution phenomenon, improving the power utilization and overall service life of battery products.

It should be understood that when the SOC value of the battery unit after formation is the second SOC value, that is, when the battery unit is directly formed to the second SOC value at the end of charging or at the end of discharging, the DCR test is directly performed on the battery unit without adjusting the SOC value of the battery unit again, and there is no need to convert the DCR value after the test, so that the DCR value under the SOC value at the end of charging or at the end of discharging can be directly obtained. In this case, the test process is directly simplified.

Optionally, as shown in FIG. 4, the S133 of performing the direct-current resistance test on the plurality of battery units under the second state of charge value includes S1331: performing the direct-current resistance test on the battery unit under the second state of charge value in a case that the battery unit is left standing for a preset duration.

In other words, after the battery unit is charged or discharged to the second SOC value, charging or discharging of the battery unit is stopped, then the battery unit is left standing sufficiently, and then the direct-current resistance test is performed on the battery unit. Thus, a voltage of the battery unit tends to be stable before the test is performed, thereby further improving the accuracy of the second DCR value.

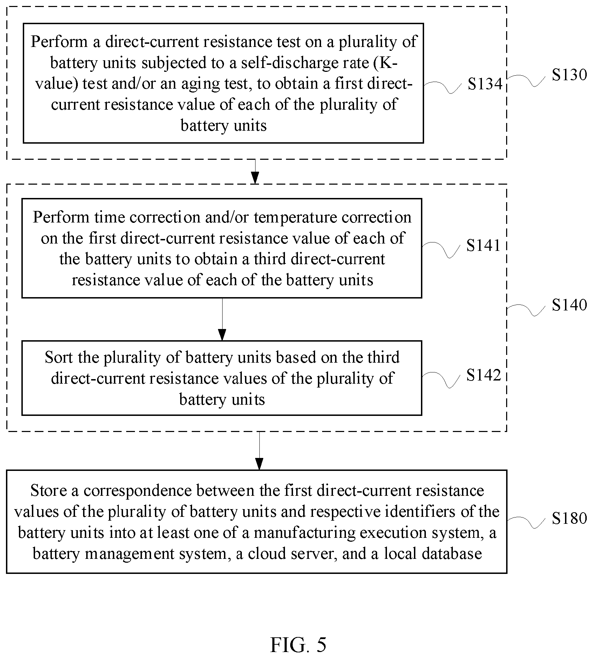

In some embodiments, there are a plurality of battery units. As shown in FIG. 5, the S130 of performing a direct-current resistance test and a capacity test on a plurality of battery units subjected to the self-discharge rate (K-value) test and/or the aging test includes S134: performing the direct-current resistance test on the plurality of battery units subjected to the self-discharge rate (K-value) test and/or the aging test, to obtain a first direct-current resistance value of each of the plurality of battery units; and the S140 of sorting the plurality of battery units based on a result of the direct-current resistance test and/or a result of the capacity test includes S141: performing time correction and/or temperature correction on the first direct-current resistance value of each of the battery units to obtain a third direct-current resistance value of each of the battery units, and S142: sorting the plurality of battery units based on the third direct-current resistance values of the plurality of battery units.

Usually, the DCR value of the battery unit exhibits an increasing trend with a storage duration. The battery unit needs to be stored in a warehouse for a certain period of time from completion of production or assembly to assembly of a battery group. Inconsistent storage duration leads to inconsistent increase of the DCR value of the battery unit. Therefore, the DCR value obtained after the battery unit is produced or assembled cannot accurately represent its DCR value when it is assembled into a battery group. It should be understood that the first DCR value and third DCR value in these embodiments of this application represent DCR values obtained at different moments, and the moment at which the first DCR value is obtained is earlier than the moment at which the third DCR value is obtained. In addition, the third DCR value may refer to a DCR value obtained at any moment after the battery unit is produced or assembled. Optionally, the first DCR value is an initial DCR value obtained by testing after the battery system is produced or assembled.

While a plurality of battery units are assembled into a battery group, the control system can control a scanning apparatus to scan an identifier of the battery unit to obtain the first DCR value of the battery unit. By scanning the identifier of the battery unit, the moment at which the first DCR value of the battery unit is obtained can be traced. When the first DCR value is the initial DCR value, the moment at which the first DCR value of the battery unit is obtained may also be referred to as a warehousing moment of the battery unit. Then, in combination with a current moment, a storage duration of the battery unit may be obtained. For example, storage duration of battery unit=current moment-warehousing moment of battery unit. After the storage duration of the battery unit and the first DCR value of the battery unit are obtained, the third DCR value of the battery unit may be calculated based on a relational expression stored inside the control system, where the third DCR value may also be referred to as a current DCR value.

A relational expression about the DCR of the battery unit and the storage duration of the battery unit may be stored inside the control system. The relational expression may be obtained by fitting a series of DCR values under different storage durations by the control system implementing the method 100, or may be obtained from another control system, that is, the relational expression is obtained by fitting a series of DCR values under different storage durations by another control system, and then sent to the control system implementing the method 100 by the another control system.

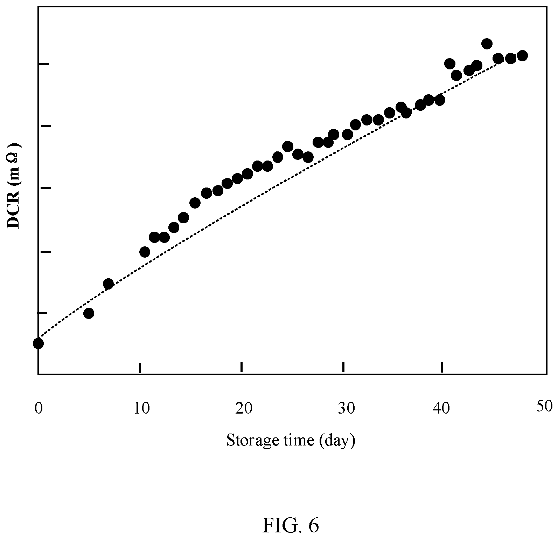

Optionally, a plurality of mass-produced battery units may be stored in a warehouse environment. In addition, a series of different storage days are selected, where a same process of DCR test is performed on a plurality of battery units of a same batch every n days, and the DCR values of the plurality of battery units of this batch under the same storage duration are averaged to obtain a series of DCR values of the battery units under different storage durations. Subsequently, the series of DCR values of the battery units under different storage durations are fitted according to "storage days, DCR values" to obtain a relational expression about the DCR value of the battery unit changing with the storage duration of the battery unit. FIG. 6 shows a schematic diagram of fitting of DCR values of the battery units of a same batch versus storage duration of the battery units.

In some embodiments, there is a relational expression about the DCR values of battery units of the same batch and the storage durations of the battery units, and there may be different relational expressions about the DCR values of battery units of different batches and the storage durations of the battery units. In other words, during time correction of the DCR value of a battery unit, the batch of the battery unit should be determined first, and then the storage duration of the battery unit is substituted into a relational expression corresponding to this batch to determine the first DCR value of the battery unit.

In other embodiments, the DCR values of battery units of different batches obtained through testing under different storage durations may be fitted, that is, there is a relational expression about the DCR values of battery units of any batch and the storage durations of the battery units. In other words, during correction of the DCR value of a battery unit, there is no need to determine the batch of the battery unit, and the storage duration of the battery unit is directly substituted into the relational expression stored inside the control system to determine the first DCR value of the battery unit.

In addition, the DCR value of the battery unit is also related to temperature. The DCR values of the battery unit obtained at different temperatures have significant differences, and thus cannot reflect the true difference between battery units. Therefore, it is necessary to eliminate the data influence caused by temperature. For example, different first DCR values of a battery unit obtained at different temperatures may be corrected to a third DCR value at a same temperature, so that the difference in the third DCR values of all battery units is not affected by temperature. This same temperature may be a reference temperature, such as 25°C, or this same temperature may be a current ambient temperature.

Similarly, a relational expression about the DCR of the battery unit and temperature may be stored inside the control system. A test temperature of the battery unit and a first DCR value under the test temperature are obtained, and then combined with the reference temperature or the current ambient temperature to obtain the third DCR value of the battery unit through calculation.

In some embodiments, for the correction of the DCR value of the battery unit, time correction may be performed first, and then temperature correction is performed. For example, time correction may be performed first on the initial DCR value obtained after the battery unit is produced or assembled, and then temperature correction may be performed on the initial DCR value subjected to time correction, to ultimately obtain a third DCR value when a battery group is obtained through assembly.

In some other embodiments, for the correction of the DCR value of the battery unit, temperature correction may be performed first, and then time correction is performed. For example, temperature correction may be performed first on the initial DCR value obtained after the battery unit is produced or assembled, and then time correction may be performed on the initial DCR value subjected to temperature correction, to ultimately obtain a third DCR value when a battery group is obtained through assembly.

In these embodiments, time correction and/or temperature correction is performed on the obtained first DCR value of the battery unit to obtain the third DCR value of the battery unit, and the third DCR value is used as the basis for DCR sorting, thereby achieving more accurate DCR control for the battery group.

In an embodiment, time correction may be performed on the first direct-current resistance value of each battery unit according to the following formula, to obtain the third direct-current resistance value of each battery unit: $R 1 = \left({aD}^{2}+bD+R0\right) * R 2 / R 0$ (1).

Here, a and b are constants, R1 represents the third direct-current resistance value of each battery unit, R2 represents the first direct-current resistance value of each battery unit, R0 represents the first direct-current resistance value of a reference battery unit, and D represents the storage duration of each battery unit.

In other words, the first DCR value of one reference battery unit and the storage days of this battery unit may be obtained first, and the third DCR value of the reference battery unit is calculated according to a fitting relational expression about the DCR value and the storage days. The third DCR value of another battery unit may be obtained by correcting the third DCR value of the reference battery unit. Assuming that the third DCR value of the reference battery unit is recorded as DCR3, the first DCR value of the reference battery unit is recorded as DCR4, the third DCR value of a battery unit to be calculated currently is recorded as DCR1, and the first DCR value of the battery unit to be calculated currently is recorded as DCR2, DCR1 is obtained through calculation according to DCR3 * DCR2 / DCR4.

It should be noted that usually after the battery unit is produced or assembled, a DCR test is performed immediately, to obtain a first DCR value, and the first DCR value is bound with an identifier of the battery unit. After the battery unit is assembled into a battery group, a third DCR value is obtained immediately, to obtain a DCR value of the battery group, and the DCR value is bound with an identifier of the battery group. Simultaneously, a first DCR value of the battery unit may also be bound with the identifier of the battery unit. Therefore, when the formula (1) is used to calculate the third DCR value of a battery unit, it is necessary to ensure that the reference battery unit and this battery unit are produced or assembled simultaneously, and are assembled into a battery group simultaneously.

In another embodiment, time correction may be performed on the first direct-current resistance value of each battery unit according to the following formula, to obtain the third direct-current resistance value of each battery unit: $R 1 = {aD}^{2} + bD + c + R 2$ (2).

Here, a, b, and c are constants, R1 represents the third DCR value of each battery unit, R2 represents the first DCR value of each battery unit, and D represents the storage duration of each battery unit.

The use of the above formula (2) for obtaining the third DCR value of each battery unit is not affected by a moment at which the first DCR value of the battery unit is obtained and a moment at which a battery group is obtained through assembly. To be specific, once the first DCR value and storage duration of the battery unit are obtained, they can be substituted into the above formula (2) to obtain the third DCR value of the battery unit.

In another embodiment, a first direct-current resistance value obtained under a test temperature may be corrected to a third direct-current resistance value under a reference temperature according to the following formula: $R 3 = f \left(T0\right) / f \left(T1\right) * R 4$ (3).

Here, R3 represents the third direct-current resistance value, R4 represents the first direct-current resistance value, T₀ represents the reference temperature, T₁ represents the test temperature, and f(T₀) and f(T₁) are respectively values obtained by substituting the reference temperature and the test temperature into a mapping function between the direct-current resistance value and temperature.

As mentioned above, a correspondence or mapping function between the DCR value and temperature may be stored inside the control system. The correspondence or mapping function may be obtained through data fitting. In an example in which battery units form a battery box, specifically, tested DCR values of all battery units and corresponding test temperatures in the production line within nearly one month may be collected, and the tested DCR values of all battery units and the test temperatures are fitted to obtain the mapping function between the DCR value and temperature.

After the control system obtains the test temperature T1, the first DCR value R4, and the reference temperature T0 of the battery unit, T1 and T0 may be first respectively substituted into the mapping function between the DCR value and temperature, and then substituted into the above formula (3), to obtain the third DCR value R4 of the battery unit through calculation.

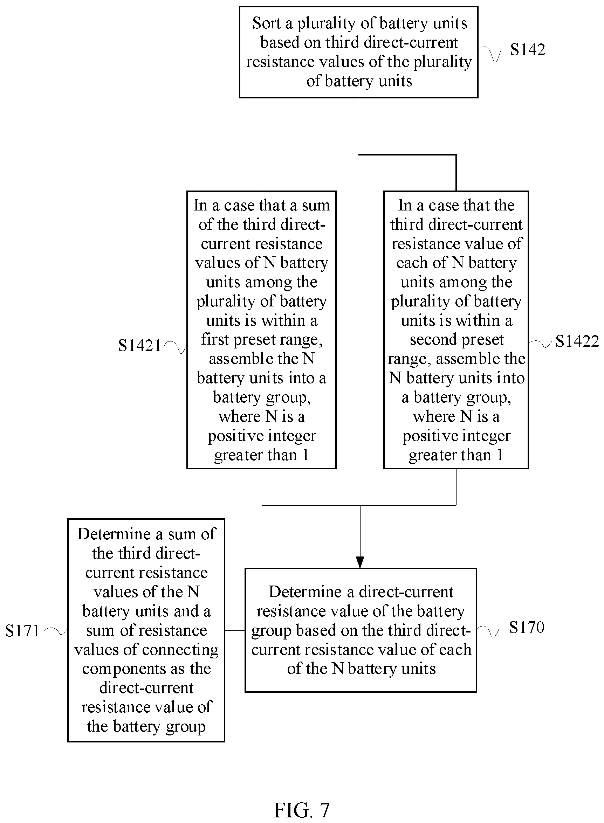

In some embodiments, as shown in FIG. 7, the S142 of sorting the plurality of battery units based on the third direct-current resistance values of the plurality of battery units includes S1421: in a case that a sum of the third direct-current resistance values of N battery units among the plurality of battery units is within a first preset range, assembling the N battery units into a battery group, where N is a positive integer greater than 1.

It should be noted that the N battery units form a battery group in a series connection manner. A battery unit may be the smallest unit, or may not be the smallest unit. For example, when N battery units are N battery cells, and the N battery cells are connected in series to form a battery box, it is necessary to determine whether a cumulative sum of the third DCR values of the N battery cells among a plurality of battery cells is within a first preset range. If the cumulative sum of the third DCR values of the N battery cells is within the first preset range, the N battery cells are assembled into a battery box. For another example, when N battery units are N battery modules, each battery module is formed by at least two battery cells that are connected in parallel, and N battery modules are connected in series to form a battery box, it is necessary to determine whether a cumulative sum of the third DCR values of the N battery modules is within the first preset range. If the cumulative sum of the third DCR values of the N battery modules is within the first preset range, the N battery modules are assembled into a battery box.

Optionally, after the first DCR value of each battery unit is obtained, the battery unit may alternatively not be subjected to time correction and/or temperature correction, and whether the cumulative sum of the first DCR values of the N battery units is within the first preset range is directly determined. If the cumulative sum of the first DCR values of the N battery units is within the first preset range, the N battery units are assembled.

The first preset range may be a DCR control range set before assembly of the battery group, for example, the DCR control range is [DCR_{lower limit}, DCR_{upper limit}]. During assembly of the battery group, the control system can control a scanning apparatus to scan the identifier of each battery unit, obtain the first DCR value of each battery unit, and perform time correction and/or temperature correction on the first DCR value, to obtain the third DCR value of each battery unit. The control system can sequentially accumulate the third DCR values of N battery units. If the cumulative sum of the third DCR values of the N battery units belongs to [DCR_{lower limit}, DCR_{upper limit}], the N battery units are normally assembled, packaged, and warehoused.

In these embodiments, during assembly of the battery group, a DCR control range for the battery group is given, and N battery units are assembled into the battery group only when it is monitored that the sum of the third DCR values of the N battery units is within the DCR control range. This method has simple control steps, is convenient to operate, and also helps to improve the DCR consistency among battery groups, reducing the probability of occurrence of uneven current distribution during charging or discharging, and ultimately improving the service life of products.

In some embodiments, the N battery units are sequentially put into an assembly line.

In some other embodiments, at least two adjacent battery units among the N battery units are not sequentially put into the assembly line.

Usually, while battery units are assembled into a battery group, the battery units are sequentially put into the assembly line. In other words, the battery units are sequentially conveyed on a conveying belt. In these embodiments of this application, the control system can monitor each battery unit put into the assembly line. In addition, a cumulative sum of the third DCR values of N consecutive battery units is calculated first. If the cumulative sum of the third DCR values of the N consecutive battery units is within the DCR control range, the N consecutive battery units can be directly assembled into a battery group. If the cumulative sum of the third DCR values of the N consecutive battery units is not within the DCR control range, some battery units among the N consecutive battery units can be replaced until the cumulative sum of the third DCR values of the new N battery units is within the DCR control range, and the new N battery units are assembled into a battery group. Since some battery units among the new N battery units are replaced by other battery units, the new N battery units assembled into the battery group are not all consecutive.

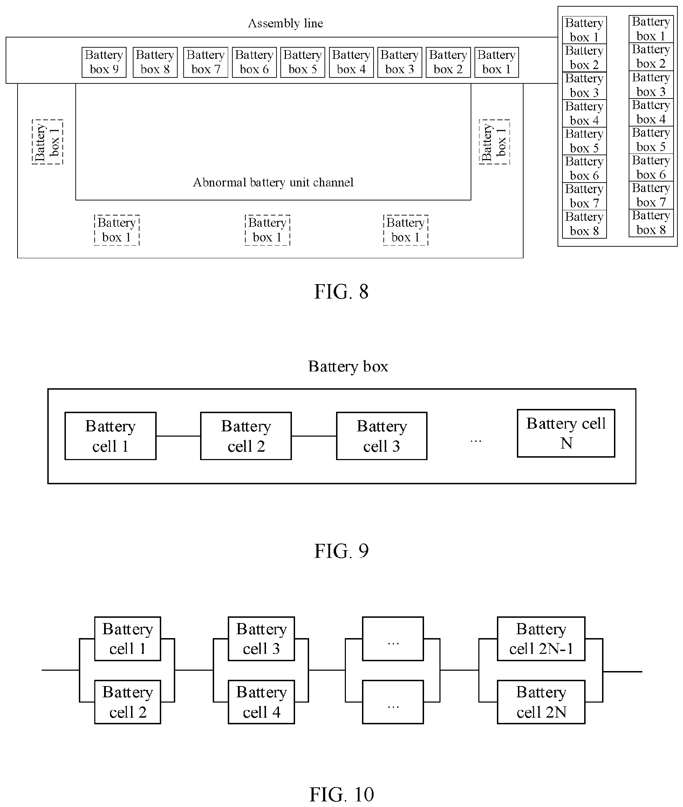

For example, as shown in FIG. 8, in an example in which battery boxes form a battery cabinet, eight battery boxes are required for one battery cabinet. The control system monitors the battery boxes put into the assembly line, and accumulates the third DCR values of the eight battery boxes in real time. When the cumulative sum of the third DCR values of the first eight battery boxes (battery box 1, battery box 2, battery box 3, battery box 4, battery box 5, battery box 6, battery box 7, and battery box 8) is within the DCR control range, the first eight battery boxes are directly assembled into a battery cabinet which is then put into a battery cabinet stacking region. When the cumulative sum of the third DCR values of the first eight battery boxes is not within the DCR control range, accumulation of the third DCR values of the second eight battery boxes may be performed. The second eight battery boxes may include the last seven battery boxes in the first eight battery boxes and the first battery box after the first eight battery boxes. For example, the second eight battery boxes include battery box 2, battery box 3, battery box 4, battery box 5, battery box 6, battery box 7, battery box 8, and battery box 9. It should be noted that battery box 1 to battery box 8 in the battery cabinet stacking region are only used to illustrate the number of battery boxes included in one battery cabinet, and do not specifically mean that battery box 1 to battery box 8 are sequentially put into the assembly line. In addition, while whether the cumulative sum of the third DCR values of the second eight battery boxes (battery box 2, battery box 3, battery box 4, battery box 5, battery box 6, battery box 7, battery box 8, and battery box 9) is within the DCR control range, battery box 1 in the first eight battery boxes is controlled to enter an abnormal battery unit channel, and the abnormal battery unit channel is directly led to the assembly line, so that battery box 1 passing through the abnormal battery unit channel can be put into the assembly line again and be monitored again by the control system.

It should be understood that as mentioned above, battery box 1 which is the first one put into the assembly line among the first eight battery boxes is controlled to enter the abnormal battery unit channel in a case that the sum of the third DCR values of the first eight battery boxes is not within the DCR control range, which is only used as an example for description. However, those skilled in the art understand that any one or more battery boxes in the first eight battery boxes can be controlled to enter the abnormal battery channel. For example, battery box 8 which is the last one put into the assembly line among the first eight battery boxes may enter the abnormal battery unit channel, or a battery box closest to the abnormal battery unit channel among the first eight battery boxes may enter the abnormal battery unit channel, which is not limited in these embodiments of this application.

In another embodiment, as shown in FIG. 7, the S142 of sorting the plurality of battery units based on the third direct-current resistance values of the plurality of battery units includes S1422: in a case that the third direct-current resistance value of each of N battery units among the plurality of battery units is within a second preset range, assembling the N battery units into a battery group, where N is a positive integer greater than 1.

Specifically, before the battery units are assembled into a battery group, at least one preset DCR range for sorting the battery units may be provided in advance. After the third DCR value of each battery unit is obtained, grades of the third DCR values of all the battery units are determined one by one, and then N battery units belonging to a same grade are assembled into a battery group.

In an example in which battery cells are assembled into a battery box, three preset DCR ranges may be set, which sequentially correspond to grade S, grade T, and grade U from a small value to a large value. After obtaining the third DCR value of a battery cell, the control system can first judge whether the battery cell belongs to grade S; if yes, the battery cell is marked as grade S or placed in a fixed position belonging to grade S; otherwise, the control system continues to determine whether the battery cell belongs to grade T. If the battery cell belongs to grade T, the battery cell is marked as grade T or placed in a fixed position belonging to grade T; otherwise, the control system continues to determine whether the battery cell belongs to grade U. If the battery cell belongs to grade U, the battery cell is marked as grade U or placed in a fixed position belonging to grade U; otherwise, the battery cell is placed in a scrap region. Each battery cell can be sorted according to this process. Whenever there are eight battery cells belonging to the same grade, the eight battery cells are directly assembled into a battery box, and the battery box can also be marked as the same grade as the battery cells, so as to facilitate subsequent assembly of battery boxes belonging to the same grade into a battery cabinet. Similarly, the battery cabinet can also be marked as the same grade as the battery boxes, so as to facilitate subsequent assembly of battery cabinets belonging to the same grade into a container. In this way, the DCR consistency among battery cabinets can be improved, and ultimately the service life of the container can be prolonged.

In this embodiment, each battery unit is sorted based on its third DCR value, and ultimately N battery units belonging to a same grade are assembled into a battery group. This method has simple control steps, is convenient to operate, and can also improve the DCR consistency among the battery units within the battery group.

Optionally, after the first DCR value of each battery unit is obtained, the battery unit may alternatively not be subjected to time correction and/or temperature correction, and whether the first DCR value of each battery unit is within a second preset range is directly determined. If the first DCR value of each of the N battery units is within the first preset range, the N battery units are assembled.

In some embodiments, as shown in FIG. 7, the method 100 further includes S170: determining a direct-current resistance value of the battery group based on the third direct-current resistance value of each of the N battery units.

The determining a DCR value of the battery group based on the third DCR value of each battery unit means that the DCR value of the battery group is calculated based on the third DCR value of each battery unit. For example, the DCR value of the battery group is equal to a sum of the third DCR values of all battery units included in the battery group. For another example, the DCR value of the battery group at least includes the sum of the third DCR values of all battery units included in the battery group.

Similarly, while the DCR value of the battery group is determined, calculation may also be performed based on the first DCR value of each battery unit, which is not limited in these embodiments of this application.

In these embodiments, the DCR value of the battery group may be calculated based on the third DCR value of each of the plurality of battery units, without performing a DCR test on the battery group, which reduces device costs of the production line and increases the production capacity. In addition, obtaining the DCR value of each battery unit also helps to understand the balance inside the battery group, thereby improving the performance of the entire battery group.

In some embodiments, the battery group further includes connecting components. As shown in FIG. 7, the S170 of determining a direct-current resistance value of the battery group based on the third direct-current resistance value of each of the N battery units includes S171: determining a sum of the third direct-current resistance values of the N battery units and a sum of resistance values of the connecting components as the direct-current resistance value of the battery group.

In other words, for the battery group, the DCR value of the battery group can be decomposed into the DCR values of the battery unit part and the resistance values of other connecting components. Optionally, the connecting component in the battery group may include at least one of a busbar component, a fuse, a high-voltage wiring harness, and a switch. For example, if the battery group is a battery box, the battery box may be formed by a plurality of battery cells that are connected through a busbar component, so that electrical energy between the plurality of battery cells can be transmitted. The battery box further includes a fuse and a manual maintenance switch, which are configured to protect a circuit and prevent damage to the battery box caused by abnormal situations such as overcurrent or overheating. For another example, if the battery group is a battery cabinet, the battery cabinet may be formed by a plurality of battery boxes that are connected through a high-voltage wiring harness and various functional connecting components in a main control box. For example, the functional connecting components may include a busbar component, a fuse, an isolation switch, a circuit breaker, a current sensor, a connector, and the like.

In these embodiments, by determining the sum of the third DCR values of the N battery units and the resistance values of the connecting components as the DCR value of the battery group, on one hand, the resistance of the connecting components is considered, which improves the accuracy of a direct-current internal resistance of the battery group in comparison with a solution of directly using the direct-current internal resistance of the N battery units as the direct-current internal resistance of the battery group; on the other hand, as compared with a solution of obtaining the direct-current internal resistance of the battery group through testing, the device costs of the production line can be reduced, and the production capacity is increased.

Optionally, the battery group is a battery box, and the battery unit is a battery cell.

In an embodiment, as shown in FIG. 9, the battery box is formed by N battery cells that are connected in series, where one battery cell is divided into one group of battery cells. Assuming that the first DCR value of battery cell 1 is DCR₁, the first DCR value of battery cell 2 is DCR₂, ..., and so on, the first DCR value of battery cell N is DCR_{N}. The DCR values of the N battery cells may be calculated according to the following formula: $x = {DCR}_{1} + {DCR}_{2} + … + {DCR}_{N}$ (4).

In another embodiment, as shown in FIG. 10, the battery box is formed by N groups of battery cells that are connected in series, and each group of battery cells is formed by two battery cells that are connected in parallel. Assuming that the first DCR value of battery cell 1 is DCR₁, the first DCR value of battery cell 2 is DCR₂, ..., and so on, the first DCR value of battery cell 2N-1 is DCR_{2,N-1}, and the first DCR value of battery cell 2N is DCR_{2N}. Therefore, the DCR value of 2N battery cells may be calculated according to the following formula: $x = \frac{{DCR}_{1} ∗ {DCR}_{2}}{{DCR}_{1} + {DCR}_{2}} + ⋯ + \frac{{DCR}_{2 N - 1} ∗ {DCR}_{2 N}}{{DCR}_{2 N - 1} + {DCR}_{2 N}}$ (5).

In other embodiments, the battery group is a battery cabinet or a battery cluster, and the battery unit is a battery box. For example, the battery cabinet or battery cluster includes N battery boxes connected in series, and a sum of the DCR values of the N battery boxes may be calculated according to the above formula (4).

In some embodiments, the resistance value of the connecting component may be determined according to the following formula: $z = R 5 \left(1+αT\right)$ (6).

Here, α represents a temperature coefficient of the connecting component, R5 represents a test value of the connecting component, and T represents a current ambient temperature.

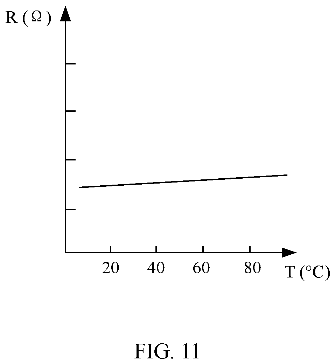

For example, the test value R5 of a busbar component in the battery box is measured at a room temperature of 25°C, the temperature is adjusted to obtain resistance values z of the busbar component at different temperatures, and the resistance values z at different temperatures and temperatures T are fitted to obtain the temperature coefficient α of the busbar component, as shown in FIG. 11. In a similar way, the temperature coefficients of other connecting components in the battery box can also be obtained. An ambient temperature during assembly in a battery box production line and the test values of the connecting components are substituted into the above formula (6) to obtain corrected resistance values of other connecting components except the battery cells. Ultimately, during calculation of the DCR value of the battery box, the corrected resistance values of all the connecting components need to be summed up to obtain the resistance value z of the connecting components in the battery box.

In some embodiments, as shown in FIG. 5, the method 100 further includes S180: storing a correspondence between the first direct-current resistance values of the plurality of battery units and respective identifiers of the battery units into at least one of a manufacturing execution system, a battery management system, a cloud server, and a local database.

For example, after the first DCR value of a battery cell is obtained, the first DCR value of this battery cell may be uploaded into at least one of a manufacturing execution system (Manufacturing Execution System, MES), a battery management system (Battery Management System, BMS), a cloud server, and a local database, to realize the binding between the identifier and the first DCR value of the battery cell. Subsequently, during calculation of the DCR value of the battery box or even the DCR value of the battery cabinet, the DCR value of each battery cell can be traced. Thus, the DCR value of the battery box or the DCR value of the battery cabinet may be calculated based on the DCR value of the battery cell, without performing a DCR test on the battery box or the battery cabinet, thereby reducing test costs.

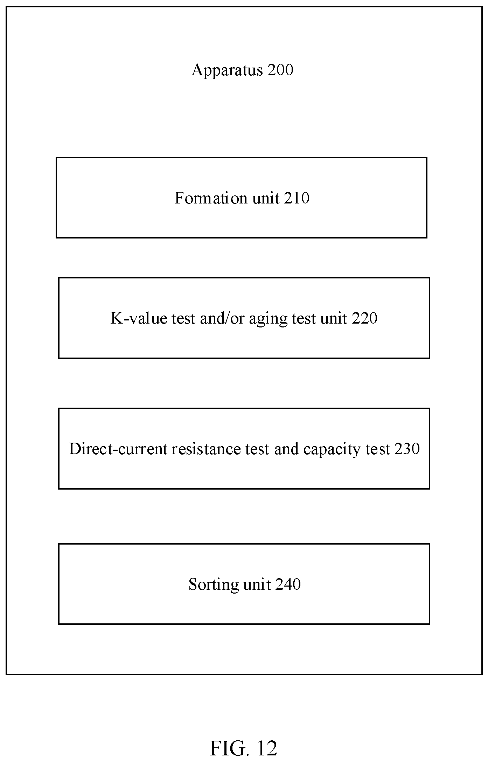

The battery sorting method of the embodiments of this application is described in detail above. A battery sorting apparatus of the embodiments of this application is described in detail below with reference to FIG. 12 to FIG. 14. The technical features described in the method embodiments are applicable to the following apparatus embodiments.

FIG. 12 shows a schematic block diagram of a battery manufacturing apparatus 200 according to an embodiment of this application. As shown in FIG. 12, the apparatus 200 includes part or all of the following content.

A formation unit 210 is configured to perform a formation treatment on a battery unit.

A K-value test and/or aging test unit 220 is configured to perform a self-discharge rate (K-value) test and/or an aging test on the battery unit subjected to the formation treatment, to stabilize a voltage of the battery unit.

A direct-current resistance test and capacity test unit 230 is configured to perform a direct-current resistance test and a capacity test on the battery unit subjected to the self-discharge rate (K-value) test and/or the aging test.

A sorting unit 240 is configured to sort the battery unit based on a result of the direct-current resistance test and/or a result of the capacity test.

In an embodiment, the formation unit 210 is specifically configured to: form the battery unit to a first state of charge value; and the direct-current resistance test and capacity test unit 230 is specifically configured to: perform the direct-current resistance test on the battery unit subjected to the self-discharge rate (K-value) test and/or the aging test under the first state of charge value.

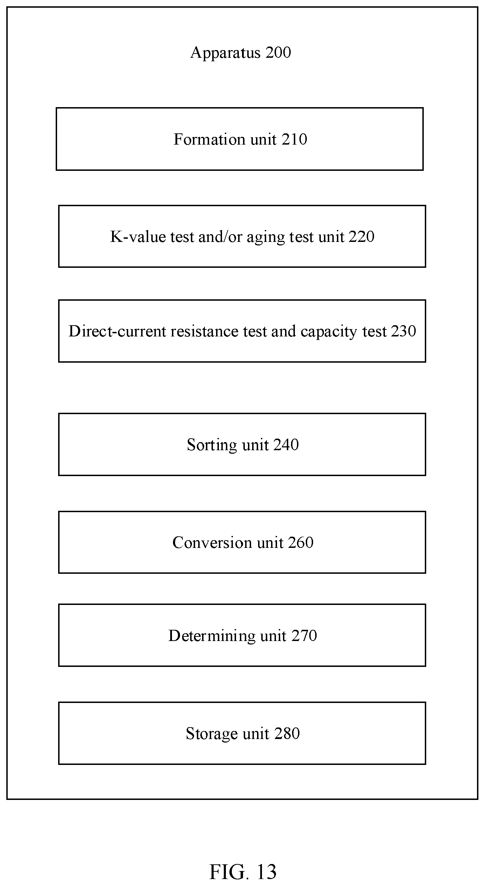

In an embodiment, as shown in FIG. 13, the apparatus 200 further includes: a conversion unit 260 configured to convert a first direct-current resistance value obtained by performing the direct-current resistance test under the first state of charge value into a second direct-current resistance value under a second state of charge value; where the second state of charge value is within a state of charge range at the end of charging, or the second state of charge value is within a state of charge range at the end of discharging.

In an embodiment, the direct-current resistance test and capacity test unit 230 is specifically configured to: adjust a state of charge of the battery unit subjected to the self-discharge rate (K-value) test and/or the aging test to a second state of charge value, and perform the direct-current resistance test on the battery unit under the second state of charge value; where the second state of charge value is within a state of charge range at the end of charging, or the second state of charge is within a state of charge range at the end of discharging.

In an embodiment, the direct-current resistance test and capacity test unit 230 is specifically configured to: perform the direct-current resistance test on the battery unit under the second state of charge value in a case that the battery unit is left standing for a preset duration.

In an embodiment, the state of charge range at the end of charging is [75%, 100%], and/or the state of charge range at the end of discharging is [10%, 25%].

In an embodiment, there are a plurality of battery units. The direct-current resistance test and capacity test unit 230 is specifically configured to: perform the direct-current resistance test on the plurality of battery units subjected to the self-discharge rate (K-value) test and/or the aging test, to obtain a first direct-current resistance value of each of the plurality of battery units. The sorting unit 240 is specifically configured to: perform time correction and/or temperature correction on the first direct-current resistance value of each of the battery units to obtain a third direct-current resistance value of each of the battery units, and sort the plurality of battery units based on the third direct-current resistance values of the plurality of battery units.

In an embodiment, the sorting unit 240 is specifically configured to: in a case that a sum of the third direct-current resistance values of N battery units among the plurality of battery units is within a first preset range, assemble the N battery units into a battery group, where N is a positive integer greater than 1.

In an embodiment, the sorting unit 240 is specifically configured to: in a case that the third direct-current resistance value of each of N battery units among the plurality of battery units is within a second preset range, assemble the N battery units into a battery group, where N is a positive integer greater than 1.

In an embodiment, as shown in FIG. 13, the apparatus 200 further includes: a determining unit 270 configured to determine a direct-current resistance value of the battery group based on the third direct-current resistance value of each of the N battery units.

In an embodiment, the battery group further includes connecting components, and the determining unit 270 is specifically configured to: determine a sum of the third direct-current resistance values of the N battery units and a sum of resistance values of the connecting components as the direct-current resistance value of the battery group.

In an embodiment, the battery unit is a battery cell, and the battery group is a battery box; or the battery unit is a battery box, and the battery group is a battery cabinet.

In an embodiment, as shown in FIG. 13, the apparatus 200 further includes: a storage unit 280 configured to store a correspondence between the first direct-current resistance values of the plurality of battery units and respective identifiers of the battery units into at least one of a manufacturing execution system, a battery management system, a cloud server, and a local database.

It should be understood that the above-mentioned modules in the apparatus 200 are all configured to execute the corresponding processes in the methods shown in FIG. 2 to FIG. 11. For brevity, details are not repeated herein.

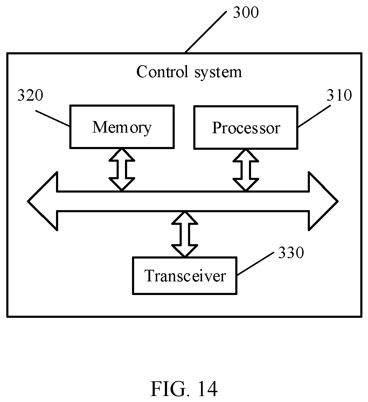

FIG. 14 shows a schematic block diagram of a control system 300 according to an embodiment of this application. As shown in FIG. 14, the control system 300 includes a processor 310 and a memory 320, where the memory 320 is configured to store instructions, and the processor 310 is configured to read the instructions and execute the methods of the foregoing various embodiments of this application based on the instructions.

The memory 320 may be a separate device independent of the processor 310, or may be integrated into the processor 310.

Optionally, as shown in FIG. 14, the control system 300 may further include a transceiver 330, and the processor 310 can control the transceiver 330 to communicate with other devices. Specifically, the transceiver 330 can send information or data to other devices, or receive information or data sent by other devices.

It should be understood that the processor in this embodiment of this application may be an integrated circuit chip with signal processing capability. In an implementation process, the steps of the above method embodiments may be implemented by integrated logic circuits of hardware in the processor or instructions in the form of software. The above processor may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component, which can implement or execute the methods, steps, and logical block diagrams disclosed in the embodiments of this application. The general-purpose processor may be a microprocessor, or the processor may be any conventional processor or the like. The steps of the method disclosed in combination with the embodiments of this application can be directly embodied as executed and implemented by a hardware decoding processor, or executed and implemented through a combination of hardware and software modules in the decoding processor. The software modules may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the above-mentioned method in combination with its hardware.

It can be understood that the memory in the embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external high-speed cache. By way of exemplary illustration rather than restrictive illustration, various forms of RAM are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described herein is intended to include, but is not limited to, these and any other suitable types of memories.

An embodiment of this application further provides a computer-readable storage medium for storing a computer program.

Optionally, the computer-readable storage medium can be applied to the control system in the embodiments of this application, and the computer program causes a computer to execute corresponding processes implemented by the control system in the various methods of the embodiments of this application. For the sake of brevity, details are not repeated here.

An embodiment of this application further provides a computer program product, including computer program instructions.

Optionally, the computer program product can be applied to the control system in the embodiments of this application, and the computer program instructions cause the computer to execute the corresponding processes implemented by the control system in the various methods of the embodiments of this application. For brevity, details are not repeated herein.

An embodiment of this application further provides a computer program.

Optionally, the computer program can be applied to the control system in the embodiments of this application. When running on a computer, the computer program causes the computer to execute the corresponding processes implemented by the control system in the various methods of the embodiments of this application. For brevity, details are not repeated herein.

In the several embodiments provided in this application, it should be understood that the disclosed systems, apparatuses, and methods can be implemented in other ways. For example, the apparatus embodiments described above are only illustrative. For example, the division of units is only a logical function division, and other division methods may be used in actual implementation. For example, a plurality of units or components may be combined or integrated into another system, or some features may be ignored or not executed. In addition, the displayed or discussed mutual coupling, direct coupling, or communication connection may be indirect coupling or communication connection through some interfaces, apparatuses, or units, which may be electrical, mechanical, or in other forms.

The units described as separate components may be or may not be physically separated, and the components displayed as units may be or may not be physical units, that is, they may be located in one place, or distributed to a plurality of network units. Some or all of the units may be selected to achieve the purposes of the solution of the embodiments according to actual needs.

In addition, the functional units in the embodiments of this application may be integrated into one processing unit, or the units may exist physically alone, or two or more units may be integrated into one unit.

If the functions are implemented in the form of software functional units and sold or used as independent products, they may be stored in a computer-readable storage medium. Based on such understanding, the technical solution of this application, or the part contributing to the prior art, or part of the technical solution can essentially be embodied in the form of software products. The computer software product is stored in a storage medium, including several instructions to cause a computer device (which may be a personal computer, a server, a network device, or the like) to execute all or some of the steps of the methods described in the embodiments of this application. The foregoing storage medium includes various media that can store program codes, for example, a U disk, a mobile hard disk, a ROM, a RAM, a magnetic disk, or an optical disk.

The above descriptions are only specific embodiments of this application, but the protection scope of this application is not limited thereto. Any person skilled in the art can readily conceive of variations or substitutions within the technical scope disclosed in this application, which should all fall within the protection scope of this application. Therefore, the protection scope of this application should be subject to the protection scope of the claims.

## Claims

1. A battery manufacturing method, **characterized by** comprising:
performing a formation treatment on a battery unit;
performing a self-discharge rate (K-value) test and/or an aging test on the battery unit subjected to the formation treatment, to stabilize a voltage of the battery unit;
performing a direct-current resistance test and a capacity test on the battery unit subjected to the self-discharge rate (K-value) test and/or the aging test; and
sorting the battery unit based on a result of the direct-current resistance test and/or a result of the capacity test.

2. The method according to claim 1, **characterized in that** the performing a formation treatment on a battery unit comprises:
forming the battery unit to a first state of charge value; and
the performing a direct-current resistance test and a capacity test on the battery unit subjected to the self-discharge rate (K-value) test and/or the aging test comprises:
performing the direct-current resistance test on the battery unit subjected to the self-discharge rate (K-value) test and/or the aging test under the first state of charge value.

3. The method according to claim 2, **characterized in that** the method further comprises:
converting a first direct-current resistance value obtained by performing the direct-current resistance test under the first state of charge value into a second direct-current resistance value under a second state of charge value;
wherein the second state of charge value is within a state of charge range at the end of charging, or the second state of charge value is within a state of charge range at the end of discharging.

4. The method according to claim 1, **characterized in that** the performing a direct-current resistance test and a capacity test on the battery unit subjected to the self-discharge rate (K-value) test and/or the aging test comprises:
adjusting a state of charge of the battery unit subjected to the self-discharge rate (K-value) test and/or the aging test to a second state of charge value; and
performing the direct-current resistance test on the battery unit under the second state of charge value;
wherein the second state of charge value is within a state of charge range at the end of charging, or the second state of charge is within a state of charge range at the end of discharging.

5. The method according to claim 4, **characterized in that** the performing the direct-current resistance test on the battery unit under the second state of charge value comprises:
performing the direct-current resistance test on the battery unit under the second state of charge value in a case that the battery unit is left standing for a preset duration.

6. The method according to any one of claims 3 to 5, **characterized in that** the state of charge range at the end of charging is [75%, 100%], and/or the state of charge range at the end of discharging is [0%, 25%].

7. The method according to any one of claims 1 to 6, **characterized in that** there are a plurality of battery units, and the performing a direct-current resistance test and a capacity test on the battery unit subjected to the self-discharge rate (K-value) test and/or the aging test comprises:
performing the direct-current resistance test on the plurality of battery units subjected to the self-discharge rate (K-value) test and/or the aging test, to obtain a first direct-current resistance value of each of the plurality of battery units; and
the sorting the plurality of battery units based on a result of the direct-current resistance test and/or a result of the capacity test comprises:
performing time correction and/or temperature correction on the first direct-current resistance value of each of the battery units to obtain a third direct-current resistance value of each of the battery units; and
sorting the plurality of battery units based on the third direct-current resistance values of the plurality of battery units.

8. The method according to claim 7, **characterized in that** the sorting the plurality of battery units based on the third direct-current resistance values of the plurality of battery units comprises:
in a case that a sum of the third direct-current resistance values of N battery units among the plurality of battery units is within a first preset range, assembling the N battery units into a battery group, wherein N is a positive integer greater than 1.

9. The method according to claim 7, **characterized in that** the sorting the plurality of battery units based on the third direct-current resistance values of the plurality of battery units comprises:
in a case that the third direct-current resistance value of each of N battery units among the plurality of battery units is within a second preset range, assembling the N battery units into a battery group, wherein N is a positive integer greater than 1.

10. The method according to claim 8 or 9, **characterized in that** the method further comprises:
determining a direct-current resistance value of the battery group based on the third direct-current resistance value of each of the N battery units.

11. The method according to claim 10, **characterized in that** the battery group further comprises connecting components, and the determining a direct-current resistance value of the battery group based on the third direct-current resistance value of each of the N battery units comprises:
determining a sum of the third direct-current resistance values of the N battery units and a sum of resistance values of the connecting components as the direct-current resistance value of the battery group.

12. The method according to any one of claims 8 to 11, **characterized in that** the battery unit is a battery cell, and the battery group is a battery box; or the battery unit is a battery box, and the battery group is a battery cabinet.

13. The method according to any one of claims 7 to 12, **characterized in that** the method further comprises:
storing a correspondence between the first direct-current resistance values of the plurality of battery units and respective identifiers of the battery units into at least one of a manufacturing execution system, a battery management system, a cloud server, and a local database.

14. A battery manufacturing apparatus, **characterized by** comprising:
a formation unit, configured to perform a formation treatment on a battery unit;
a K-value test and/or aging test unit, configured to perform a self-discharge rate (K-value) test and/or an aging test on the battery unit subjected to the formation treatment, to stabilize a voltage of the battery unit;
a direct-current resistance test and capacity test unit, configured to perform a direct-current resistance test and a capacity test on the battery unit subjected to the self-discharge rate (K-value) test and/or the aging test; and
a sorting unit, configured to sort the battery unit based on a result of the direct-current resistance test and/or a result of the capacity test.

15. The apparatus according to claim 14, **characterized in that** the formation unit is specifically configured to:
form the battery unit to a first state of charge value; and
the direct-current resistance test and capacity test unit is specifically configured to:
perform the direct-current resistance test on the battery unit subjected to the self-discharge rate (K-value) test and/or the aging test under the first state of charge value.

16. The apparatus according to claim 15, **characterized in that** the apparatus further comprises:
a conversion unit, configured to convert a first direct-current resistance value obtained by performing the direct-current resistance test under the first state of charge value into a second direct-current resistance value under a second state of charge value;
wherein the second state of charge value is within a state of charge range at the end of charging, or the second state of charge value is within a state of charge range at the end of discharging.

17. The apparatus according to claim 14, **characterized in that** the direct-current resistance test and capacity test unit is specifically configured to:
adjust a state of charge of the battery unit subjected to the self-discharge rate (K-value) test and/or the aging test to a second state of charge value; and
perform the direct-current resistance test on the battery unit under the second state of charge value;
wherein the second state of charge value is within a state of charge range at the end of charging, or the second state of charge is within a state of charge range at the end of discharging.

18. The apparatus according to claim 17, **characterized in that** the direct-current resistance test and capacity test unit is specifically configured to:
perform the direct-current resistance test on the battery unit under the second state of charge value in a case that the battery unit is left standing for a preset duration.

19. The apparatus according to any one of claims 16 to 18, **characterized in that** the state of charge range at the end of charging is [75%, 100%], and/or the state of charge range at the end of discharging is [10%, 25%].

20. The apparatus according to any one of claims 14 to 19, **characterized in that** there are a plurality of battery units, and the direct-current resistance test and capacity test unit is specifically configured to:
perform the direct-current resistance test on the plurality of battery units subjected to the self-discharge rate (K-value) test and/or the aging test, to obtain a first direct-current resistance value of each of the plurality of battery units; and
the sorting unit is specifically configured to:
perform time correction and/or temperature correction on the first direct-current resistance value of each of the battery units to obtain a third direct-current resistance value of each of the battery units; and
sort the plurality of battery units based on the third direct-current resistance values of the plurality of battery units.

21. The apparatus according to claim 20, **characterized in that** the sorting unit is specifically configured to:
in a case that a sum of the third direct-current resistance values of N battery units among the plurality of battery units is within a first preset range, assemble the N battery units into a battery group, wherein N is a positive integer greater than 1.

22. The apparatus according to claim 20, **characterized in that** the sorting unit is specifically configured to:
in a case that the third direct-current resistance value of each of N battery units among the plurality of battery units is within a second preset range, assemble the N battery units into a battery group, wherein N is a positive integer greater than 1.

23. The apparatus according to claim 21 or 22, **characterized in that** the apparatus further comprises:
a determining unit, configured to determine a direct-current resistance value of the battery group based on the third direct-current resistance value of each of the N battery units.

24. The apparatus according to claim 23, **characterized in that** the battery group further comprises connecting components, and the determining unit is specifically configured to:
determine a sum of the third direct-current resistance values of the N battery units and a sum of resistance values of the connecting components as the direct-current resistance value of the battery group.

25. The apparatus according to any one of claims 21 to 24, **characterized in that** the battery unit is a battery cell, and the battery group is a battery box; or the battery unit is a battery box, and the battery group is a battery cabinet.

26. The apparatus according to any one of claims 20 to 25, **characterized in that** the apparatus further comprises:
a storage unit, configured to store a correspondence between the first direct-current resistance values of the plurality of battery units and respective identifiers of the battery units into at least one of a manufacturing execution system, a battery management system, a cloud server, and a local database.

27. A control system, **characterized by** comprising:
a memory, configured to store instructions; and
a processor, configured to read the instructions and execute the method according to any one of claims 1 to 13 based on the instructions.
